# EUROPEAN PATENT SPECIFICATION

(11) **EP 2 597 056 B1**
(45) Date of publication and mention of the grant of the patent: **19.08.2015**
(21) Application number: 12193984.7
(22) Date of filing: 23.11.2012
(51) Int. Cl.: B65D 90/00, B60P 7/08

(54) **Transport unit with support arrangement for supporting load**
Transporteinheit mit Traganordnung zum Tragen einer Last
Unité de transport comprenant un ensemble de support pour supporter une charge

(30) Priority: 25.11.2011 FI 20116185
(43) Date of publication of application: 29.05.2013
(73) Proprietor: Oy Langh Ship Ab, 21500 Piikkiö (FI)
(72) Inventor: Langh, Hans, 21500 Piikkiö (FI)
(74) Representative: Kolster Oy Ab

(56) References cited:
- EP-B1- 1 289 861
- US-A- 2 268 394
- US-A- 2 756 693
- US-A- 3 783 798
- US-A- 4 219 229
- US-A- 5 494 387
- US-B1- 6 890 138

## Description

### Background of the invention

The invention relates to a transport unit, such as a container, a railway carriage, a truck or a trailer of a vehicle combination and a movable loading platform, the transport unit comprising a loading base for supporting a load from below in a vertical direction in a transport unit and a support arrangement for supporting the load in a horizontal direction in the transport unit, the support arrangement comprising at least one support column whose bottom end is arranged to be supported by the bottom of the transport unit and whose side is to be set against the load to be supported, the loading base of the transport unit comprising a set of locking recesses for receiving bottom ends of support columns and for fastening the support columns in a detachable manner to the loading base, the locking recesses being arranged in the bottom of the transport unit in at least one line parallel with the longitudinal axis of the transport unit and, in addition, in a plural number of parallel lines that are transverse to the longitudinal axis of the transport unit, the locking recesses comprising fastening means arranged to lock the support columns and a fastening member at the bottom end of the support columns so that when the fastening member is in a locked position in relation to the fastening means, lifting of the support column from the locking recess is prevented, and the locking recesses being arranged to enable the fastening member of the support column to be released from the fastening means and the support column to be lifted from the locking recess, when the fastening member is in a released position in relation to the fastening means. The transport unit is particularly well suited for transporting extremely heavy cargo, such as metal plates.

Patent publication US 4,219,229 discloses a transport unit and a support arrangement of the above type. The support arrangement comprises stanchions extending closely adjacent side surfaces of the cargo to be supported. A foot and a finger is provided at the bottom end of the stanchions. The foot has a flat lower face adapted - in order to minimize lateral shift of the stanchion - to abut against the upper surface of the vehicle bed, the foot and the finger forcibly engaging opposite surfaces of the bed, thereby stabilizing the stanchion in an upright condition projecting upwards from the bed upper surface. Bands tensioned above the load and fastened to the stanchions can be used to provide tie-downs for load to be supported.

Patent publication EP 1289861 B1 discloses a transport unit of the above type in the form of a container, and a support arrangement of the above type. This prior art support arrangement requires that the support column is locked detachably in place to the ceiling of the container, the support column being then tightened against the load by tightening means supported by a rail on the ceiling. Although in most applications this prior art support arrangement is easy to use and provides the load to be transported with good support, its use may be laborious in containers with a detachable roof. Its use is particularly slow and laborious when stowage into the container takes place from above, with the container roof detached, because the load cannot be supported by putting the support columns in place before the roof is set in place. Correspondingly, discharge of load from above of the container requires all the support columns to be opened first, after which the roof can be lifted off. The laborious loading and discharge disclosed above particularly concern high and bulky loads. A further disadvantage of the prior art support arrangement is that is not suited for use in transport units with no roof at all.

### Brief description of the invention

It is an object of the invention to provide a transport unit comprising a easy to use support arrangement suited for use in most diversified transport units, which do not necessarily have a ceiling or even walls.

To achieve this object, a transport unit of the invention is defined by the features of claim 1. The transport unit comprises tightening means for tilting and tightening the support column against the load and the tightening means comprising an elongated flexible member and a tightening device for tightening the elongated flexible member, a first fastening end of the tightening means being fastened to the transport unit and a second end of the tightening means, which is opposite to the first fastening end being fastened to a top end of the support column, the tightening means being arranged to tilt the support column and change the angle thereof in relation to the loading base so that the support column presses against the load when the elongated flexible member is tightened with the tightening device.

The locking recess has preferably a shape that corresponds to the shape of the fastening members of the support column and the fastening member is placed into the locked position by turning the fastening member in relation to the locking recess. This type of locking, which may be called a shape locking, is easy to carry out. Only a small amount of force is needed for turning the fastening member into the locked position and for releasing it from the locked position.

Moreover, the shape of the locking recess preferably resembles a shape of a key hole comprising a centrally located circular opening and two extensions of the opening, located diametrically opposite to one another in relation to the circular opening, the shape of the locking recess comprising two diametrically opposite circular rings, each having a central angle of 40 to 150 degrees. The circular rings define support surfaces to which the fastening members of the support column may support in a lateral direction without causing high point loads to the locking arrangements of the support columns.

Preferred embodiments of the transport unit are disclosed in the accompanying dependent claims.

The greatest advantage of the transport unit of the invention is that it comprises a support arrangement that enables a load, a heavy load in particular, to be supported in an extremely secure manner even if the construction and type of the transport unit should vary greatly. The load can be safely supported although its dimensions may vary greatly. In addition, the tightening means of the support arrangement can be implemented by simple structures, such as winch arrangements associated with a tightening belt and a ratchet, or a turnbuckle screw. The support arrangement does not require the transport unit to comprise a ceiling against which the support arrangement would be supported. Complicated expensive special arrangements are not needed. Further still, compared with conventional load support methods, which may require nailing of wooden supports to a plywood floor, the transport unit of the invention is rapidly loadable and made ready for transport.

### Brief description of the figures

In the following, the invention will be explained in greater detail in connection with the preferred embodiments and with reference to the attached drawings, in which:
Figures 1 and 2 show an end view and a top view, respectively, of fastening of a load of plates to a container of the invention;
Figures 3 and 4 show an end view and a top view, respectively, of fastening of a load to a container in a manner differing in its details from the fastening in Figures 1 and 2;
Figures 5 and 6 show an end view and a top view, respectively, of fastening of a load to a movable transport platform without walls and a roof;
Figure 7 is a top view illustrating a structure of a loading base of the transport units of Figures 1 to 6;
Figure 8 is a side view illustrating a support column used in the transport units of Figures 1 to 6 and to be fastened to the loading base of Figure 7, and its fastening to the bottom of the container;
Figure 9 illustrates a bottom end of a support column seen from below;
Figure 10 is a view from above of the top end of the support column of Figure 8;
Figure 11 is a view from below illustrating how a fastening member of a support column is locked to a locking recess in the loading base;
Figure 12 is a view corresponding to that of Figure 1, in which the load is tightened with tightening means different from those in Figure 1;
Figure 13 shows a more detailed view of the tightening means of Figure 12; and
Figures 14 to 16 show a side view and a view from above, respectively, of the top end of the support columns in Figure 12.

### Detailed description of the invention

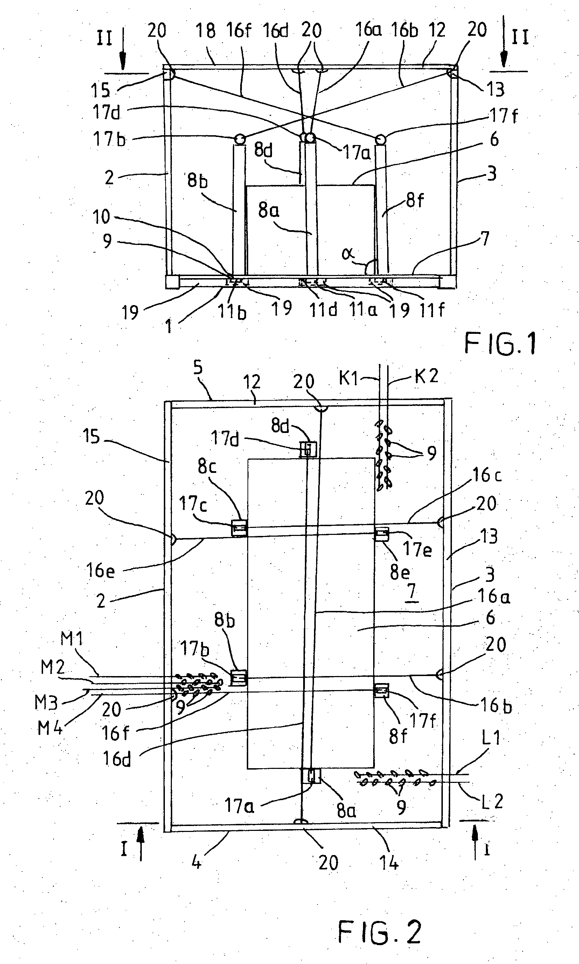

Figure 1 illustrates a container seen from one end of the container in a longitudinal direction thereof. Figure 2 illustrates the container seen along a section line II-II of Figure 1. Figure 1 illustrates the container seen along a section line I-I of Figure 2.

The container in Figures 1 and 2 comprises a bottom generally indicated with reference numeral 1, two sides 2, 3 or side walls and two ends 4, 5 or end walls. The container has a roof 18 that is detachable to allow the container to be easily stowed from above by a crane. The locking of the roof 18 is not disclosed because it belongs to the skills of a person skilled in the art. Inside the container, there is a load 6 placed onto a loading base 7 of the container. The load 6 consists of heavy steel plates, although naturally it may consist of any kind of solid load of predetermined outer dimensions. The loading base 7 supports the load 6 from below.

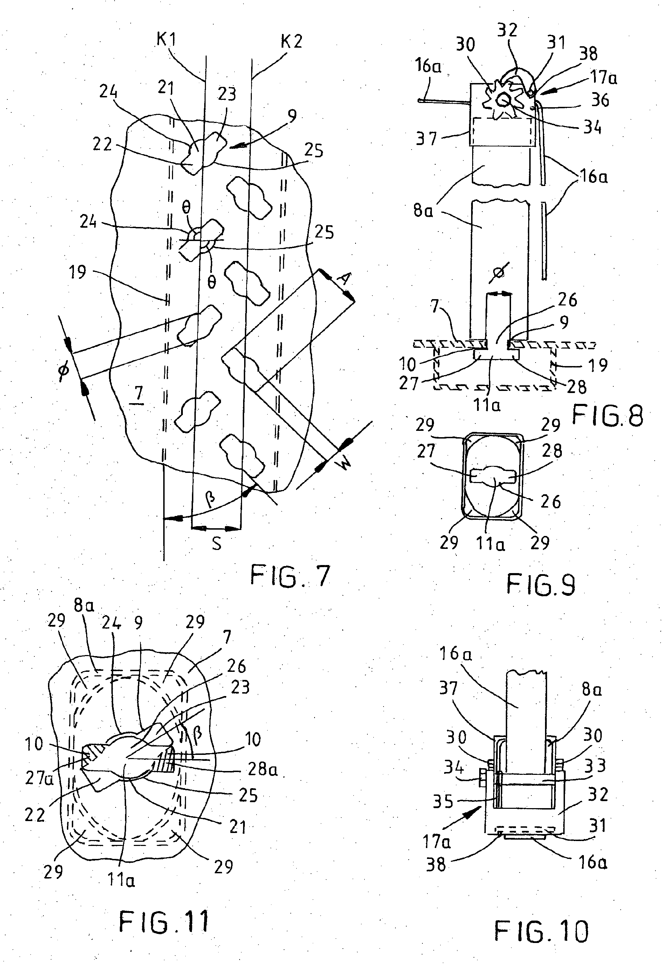

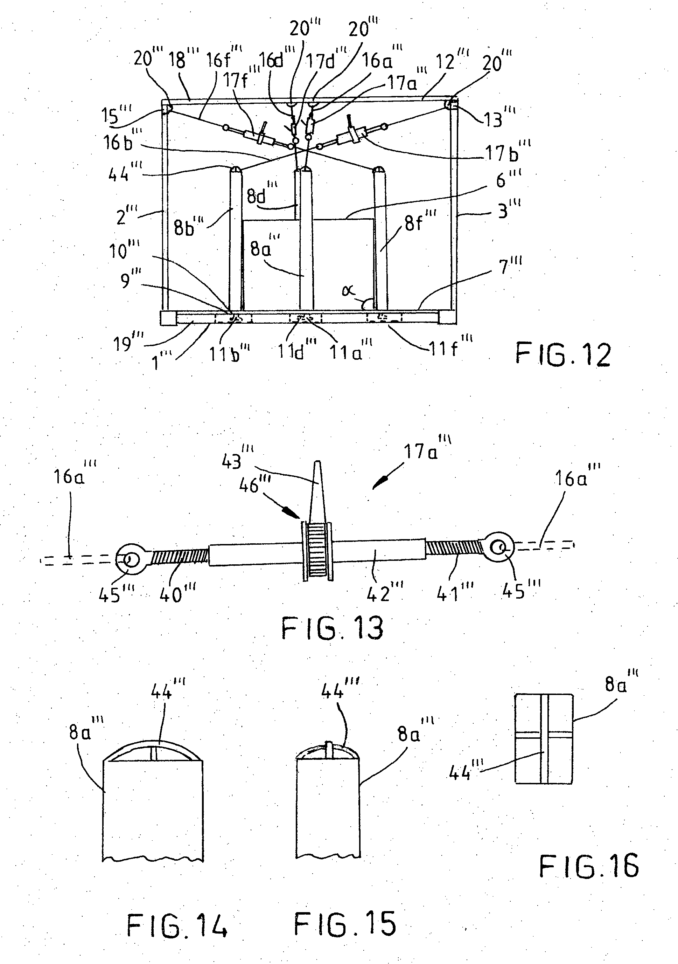

To provide horizontal support to the load 6, i.e. in the lateral direction, six support columns 8a to 8f are arranged around the load, the support columns 8a and 8d being arranged on opposite short sides of the load 6 and both longitudinal sides of the load being provided with two support columns 8b, 8c and 8e, 8f. The sides of the support columns 8a to 8f are against the load 6 and the bottom ends of the support columns are arranged to be supported by the bottom 1 of the container. The support columns 8a to 8f are detachably fastened to the loading base 7. For this purpose the loading base 7 is provided with locking recesses 9 comprising fastening means, see fastening means 10 in Figure 8 (and in Figure 11 in which the fastening means 10 are represented by surfaces 27a and 28a of diagonal lines) for locking fastening members 11a to 11f provided at the bottom ends of the support columns 8a to 8f. For the sake of simplicity, only some of the locking recesses 9 have been drawn into Figure 2. Nevertheless, Figure 2 shows that the locking recesses 9 are arranged into a plural number of parallel lines K1, K2, L1, L2, M1, M2, M3, M4, of which some lines (K1 and K2) are parallel with the longitudinal axis of the container, while other lines (L1, L2, M1, M2, M3, M4) are transverse to the longitudinal axis of the container (typically perpendicular, as in the Figures, although they may also be diagonal). Lines K1, K2, L1, L2, M1, M2, M3, M4 (etc.) continue between opposite walls of the container from one wall to another. Correspondingly, when the support columns 8b and 8f are fastened to a group of lines formed by locking lines M1 to M4, the bottom comprises corresponding locking recess lines (not drawn in the Figure) for support columns 8c and 8e. The number of the lines is great and may vary depending on the type of container or transport unit. The more densely the lines K1, K2, L1, L2 M1 to M4 are arranged, the closer to the load the bottom ends of the support columns 8a to 8f may be arranged. It is recommended that the bottom ends of the support columns 8a to 8f are very close to the load 6. However, the bottom ends of the support columns 8a to 8f do not need to come into contact with the load 6.

The locking members 11a to 11f become locked to the locking means 10 of the locking recesses 9 so that the support columns 8a to 8f tilt towards the load 6 without, however, rising up from the locking recesses during fastening or transport of the load. The fastening members 11a to 11f remain substantially in place in the locking recesses 9 and are not able to move in a lateral direction either. The top ends of the support columns 8a to 8f are joined to stiffening profiles 12 to 15 at the upper edges of the container sides and end walls by means of belts 16a to 16f or other elongated flexible members, such as chains and cables, in the manner shown in the figure. The stiffening profiles 12 to 15 are provided with fastening loops 20, or the like, to which the ends of the belts 16a to 16f are fastened. The top end of the support column 8a thus becomes fastened to the stiffening profile 12 at the top end of the end wall 5 of the container by the belt 16a, and, likewise, the top ends of the support columns 8b and 8c are fastened to the stiffening profile 13 at the top edge of the container side 3, the top ends of the support columns 8e and 8f are fastened to the stiffening profile 15 at the top edge of the container side 2, and the top end of the support column 8d is fastened to the stiffening profile 14 at the top edge of the container side 4.

The belts 16 of the support columns 8a to 8f are provided with tightening means for tilting the support columns against the load 6 (cf. angle α in Figure 1) to allow to upper part of the load to be pressed between the top parts of the support columns. The tightening means comprise tightening devices 17a to 17f arranged at the top ends of the support columns 8a to 8f to allow the belts to be tightened so that the top ends of the support columns press against the load 6. The tightening device 17a will be described in greater detail below with reference to Figure 8.

At the bottom 1 of the container there are channel-like shields 19 designed to prevent dirt and moisture from entering into the container from below and reach the fastening means 10 and the fastening members 11 as this might harm their operation. The shields 19 extend in both the longitudinal and transverse direction of the container along lines K1, K2, L1, L2, M1 to M4, protecting the fastening means 10 and members 11. At the same time the shields 19 stiffen the bottom 1, thus enabling the container construction to be made light and strong for carrying heavy cargo.

The load support arrangement shown in Figures 1 and 2 keeps the load safely in place in the container during transport. The number of the support columns 8a to 8f may vary depending on the load and the mode of transport of the container and the vehicle on which the container is to be transported.

When the container of Figures 1 and 2 is loaded, the roof 18 of the container is preferably open when the load 6 is loaded by a crane to the loading base 7. Next, the support columns 8a to 8f are put in place by setting them as close as possible to the load and by locking their fastening members 11 to the locking recesses 10. The locking is performed by turning the support columns 8a to 8f in relation to the locking recesses 9 as will be disclosed below. When locked in place, the support columns 8a to 8f are unable to rise from the locking recesses 9 even if they were subjected to an upward force. The belts 16a to 16f are then fastened to the stiffening profiles 12 to 15 of the container and tightened by the tightening device 17a to 17f, the top ends of the support columns 8a to 8f tilting towards the load 6 and pressing the top end of the load 6.

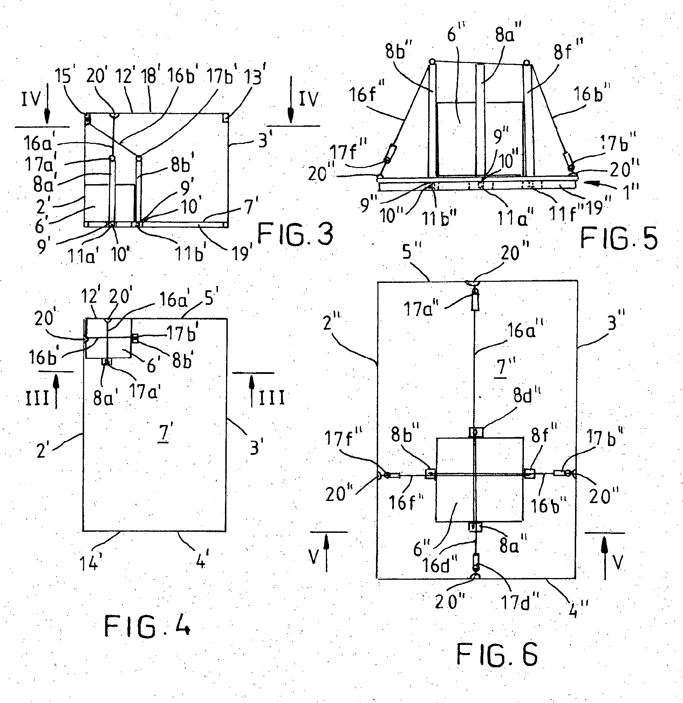

Figures 3 and 4 disclose a manner of fastening a load 6' to a container, the manner differing in details from the one in Figures 1 and 2. Figures 3 to 4 use the same reference numbers as Figures 1 to 2 for the corresponding components. The load 6' is placed onto a loading base 7' in a corner of the container, and the support columns 8a' and 8b' are locked in place. The belts 16a', 16b' tighten the support columns 8a', 8b' against the load 6'. Only two support columns 8a', 8b' are needed, because the load 6' receives support from the end wall 5' and the side wall 2'. Also in the arrangement of Figures 3 and 4 the load 6' is pressed and well supported during transport.

Figures 5 and 6 illustrate a movable loading platform of the invention. The figures use the corresponding reference numbers as Figures 1 to 2 for the corresponding components. The loading base has no walls or roof but it does have sides 2, 3 and ends 4, 5 that may be compared to sides 2 to 5 in Figures 1 and 2, because the sides 2" to 5" with fastening loops 20" act as fastening points for the belts 16a", 16b", 16d", 16f". The load 6" is supported from below by the loading base 7" and horizontally it is supported by four support columns 8a", 8b", 8d" and 8f". The top end of the load 6" is pressed between the support columns 8a" and 8b". Hence, unlike in Figures 1 and 2, in which the belts 16a to 16f are fastened to the walls of the container, in the support arrangement of Figures 5 and 6 the belts 16a", 16b" are fastened to the fastening loops 20" (or the like) on the sides 2", 5". Only four fastening loops 20" are drawn in Figures 5 and 6, although in practice there are a plural number of fastening loops arranged along the sides 2" to 5" of the loading base. It is conceivable that fastening loops 20" are also provided on the inside of the loading base sides, i.e. on the loading base or platform itself. In the solution of Figures 5 and 6 the tightening means 17a", 17b", 17d", 17d" are arranged close to the loading base 7", next to the fastening loops 20". To prevent the belts 16a", 16b", 16d", 16f" from pressing directly against the load 6", the belts are preferably arranged to by supported, as shown in the figure, by an opposite support column (by its top end that may be provided with a suitable guiding means for guiding the belt). Consequently, the belt 16b", for example, is supported by the top end of column 8f".

Figure 7 shows locking recesses 9 used in the locking arrangement of Figures 1 to 6. As shown in the Figure, the shape of the locking recesses 9 resembles a shape of a key hole comprising a centrally located circular opening 21 and two extensions 22, 23 of the opening, located diametrically opposite to one another in relation to the circular opening, the shape of the locking recess comprising two diametrically opposite circular rings 24, 25, each having a central angle θ of 40 to 150 degrees. The circular opening 21 in the locking recesses 9 preferably has a diameter ∅ of about 30 mm and the greatest length A of the locking recesses is preferably 55 mm. The extensions 22, 23 preferably have a width W of about 20 mm. Figure 7 shows that locking recesses 9 in the same line (cf. lines K1, K2 in Figures 2 and 7) are parallel and that locking recesses 9 of an adjacent line are turned 90 degrees in relation to one another, whereby they also form a zigzag pattern, i.e. one with bends. Said arrangement allows the central points of the locking recesses 9 and the lines (K1, K2 and L1, L2 and M1 to M4, cf. Figure 2) they form to be placed very close to another on the loading base 7, maintaining, however, at the same time the great strength of the loading base. The distance between adjacent lines K1, K2 from one another is about 50 mm. The central points of the locking recesses 9 being close to each other allows the support columns 8a to 8f to be brought close to the load and a good support is obtained for the load. In Figure 7 the longitudinal axis of the locking recesses 9 is at an angle β = 45 degrees to the longitudinal direction of the container or the loading unit. The same features apply to lines L1 and L2 and M1 to M4 as to lines K1 and K2. In Figure 7 the sides of the channel-like shields 19 in the direction of the longitudinal axis of the container are depicted by a broken line.

Figure 8 shows the support columns 8a to 8f used in the locking arrangement of Figures 1 and 2. Figures 3 to 6 show similar or corresponding support columns. The top end of the support columns 8a to 8f is provided with a tightening device 17a to 17f and the bottom end with a fastening member 11a to 11f. Figure 10 shows the tightening device 17a seen from above. The tightening device 17a is a ratchet-type device comprising a cogwheel 30, or the like, on both sides of the body 37 of the tightening device. When a nut 34 connected to a shaft 33 is turned, the shaft turns and allows the belt 16a to be turned about the shaft, whereby the length of the belt 16a can be adjusted and the support column to be tilted and tightened against the load. A spring 35 keeps an articulated 31 locking latch 32 locked by the cogwheels 30 when the tightening device is in the locked position. The spring 35 is a torsion spring that surrounds the shaft 33; a first end 36 of the spring is supported by the body 37 of the tightening device and a second end 38 of the spring by the locking latch 32. In the locked position the cogwheels 30, the shaft 33 and the nut 34 are immovably in place although the belt 16a is subjected to load. The structure of the tightening device is not explained in greater detail in this context because it not problematic to implement for a skilled professional.

Figures 8 and Figure 9, which illustrate the support column 8a seen from below, i.e. from the side of the fastening member 11a, show that the fastening member 11 a at the bottom end of the support column 8a comprises a circular peg 26 and protrusion parts 27, 28 pointing to opposite directions therefrom. The diameter of the peg 26 is only slightly smaller than the diameter ∅ of the circular opening 21 of the locking recess 9, thus allowing the support column 8a to be locked into the locking recess 9 without a harmful clearance. The protrusion parts 27, 28 are slightly smaller than the extensions 22, 23 in the locking recess 9. Also the solutions of Figures 3 to 6 have fastening members according to Figures 8 and 9.

When the support column 8a is fastened to the locking recess 9 in the loading base 7, the fastening member 11 a is placed into the locking recess 9 in a corresponding manner as a key is placed into a key cylinder. The protrusion parts 27, 28 of the fastening member 11 a are thus placed into the extensions 22, 23 of the locking recess 9 and the bottom end of the support column 8a is pushed into the locking recess 9 so that its protrusion parts 27, 28 set below the loading base 7, after which the support column 8a is turned 45 degrees so that it sets into the position shown in Figures 8 and 11. The corners at the bottom end of the support column 8a are bevelled to allow the support column to be placed very close to the load and turned in place beside the load without the corners being in the way; reference number 29 in Figure 9 indicates the bevels. Figure 8 shows that the locking recess 9 of the loading base 7 borders on a support surface that forms a fastening means 10 (cf. support surfaces 27a and 28a illustrated by diagonal lines in Figure 11 and the corresponding description further below), which prevents the fastening member 11 a and the support column 8a from rising from the locking recess 9 when the fastening member 11a has been turned to the locked position shown in the figure. The fastening means 10 may be referred to as a locking means because it locks the support column 8a in the vertical direction. The fastening member 11 a of the support column 8a locks the support column in the locking recesses in a shape-locked manner. Although the support column 8a is subjected to even a high upward force when the support column 8a is in the locked position, it will not rise up from the locking recess 9. This kind of high upward force may be directed to the support columns 8a to 8f e.g. when the belts 16a to 16f close to a ceiling line of the container are pulled tight. The reason for fastening the belts 16a to 16f close to the ceiling 18 line of the container, and not to a height halfway up the container walls, for example, is that there are strong stiffening profiles 12 to 15 at the container ceiling line providing fixed fastening points, whereas the container walls are flexible and do not provide a strong fastening point.

Figure 11 illustrates the locking of the fastening member 11a of the support column 8a to the locking recess 9 on the loading platform. As is seen, the locking member 11 a is at an angle β = 45 degrees to the locking recess 9. As is understood from the figure, the peg 26 of the fastening member 11a cannot move anywhere in a lateral direction after being placed into the circular opening 21 of the locking recess 9. The surfaces 27a, 28a depicted by diagonal lines and forming the fastening means 10 (in fact they form two fastening means) prevent the movement. Because the locking recess 9 comprises the circular rings 24, 25 and the locking recess is at an angle of 45 degrees to the direction in which the support column 8a, when in use, is subjected to the greatest lateral forces, the peg 26 does not cause major point loads to the locking recess 9. When the support column 8a is placed into the locking recess 9 in the locked position, but not yet tightened in place against the load, it may tilt in a lateral direction but cannot fall, however. In other words, there is no risk of accidental falling of the support column 8a.

The arrangement of Figure 12 corresponds to that of Figure 1 with the exception that in the arrangement of Figure 12 a tightening device 17a"', 17b"', 17d"', 17f"' different form the one in Figure 1 is used for tightening the support columns 8a"', 8b"', 8d"', 8f"'. Moreover, the top ends of the support columns 8a"', 8b"', 8d"', 8f"' are provided with fastening loops 44"' for receiving an end of a flexible member 16a"', 16b"', 16d"', 16f"'. Figure 12 uses corresponding reference numbers as Figure 1 for corresponding components. It is conceivable that fastening loops are arranged at different heights to the top ends of the support columns 8a"', 8b"', 8d"', 8f"'.

Figure 13 shows the tightening device 17a"' of Figure 12 in a greater detail. The tightening device 17a"' is of a turnbuckle screw type and comprises two bars 40"', 41"' provided with opposite threads, the ends of the bar being provided with ears 45"' for fastening the flexible member 16a"'. The bars 40"', 41"' are arranged to a body 42"'. When a crank 43"' is turned, the ears of the bars 40"', 41"' approach each other or part from each other, depending on the direction to which the cogwheel-latch device 46"' of the tightening device 17a"' has been arranged to operate. The turnbuckle screw is not described in greater detail in this context, because a skilled professional is familiar with its structure.

The support column is preferably made of high strength steel. It has preferably a rectangular cross-section because then it will support the load by a support surface instead of a support line as it would if the support column had a circular cross-section.

A person skilled in the art will find it apparent that the support arrangement of the invention is described above by means of examples only and that its details may be implemented in various ways within the scope of the accompanying claims. The same applies to the transport unit of the invention as defined in the accompanying claims. Hence the shape of the locking recesses, for example, may vary. The transport unit may have a fixed or a detachable roof and it may also be without a roof and walls altogether. It is also conceivable that the locking recesses are formed on a separate plate-like piece to be attached to the bottom of a conventional type transport unit, such as a standard container.

## Claims

1. A transport unit, such as a container, a railway carriage, a truck or a trailer of a vehicle combination, and a movable loading platform, the transport unit comprising a loading base (7, 7', 7", 7"') for supporting a load (6, 6', 6", 6"') from below in a vertical direction in the transport unit and a support arrangement for supporting the load in a horizontal direction in the transport unit, the support arrangement comprising at least one support column (8a to 8f, 8a', 8b', 8a", 8b", 8d", 8f", 8a"', 8b"', 8d"', 8f"') whose bottom end is arranged to be supported by the bottom (1, 1', 1", 1"') of the transport unit and whose side is to be set against the load (6, 6', 6", 6"') to be supported, the loading base (7, 7', 7", 7"') of the transport unit comprising a set of locking recesses (9, 9', 9", 9"') for receiving bottom ends of support columns (8a to 8f, 8a', 8b', 8a", 8b", 8d", 8f", 8a"', 8b"', 8d"', 8f"') and for fastening the support columns in a detachable manner to the loading base, the locking recesses (9, 9', 9", 9"') being arranged in the bottom (1, 1', 1", 1"') of the transport unit in at least one line (K1) parallel with the longitudinal axis of the transport unit and, in addition, in a plural number of parallel lines (L1, L2, M1, M2, M3, M4) that are transverse to the longitudinal axis of the transport unit, the locking recesses (9, 9', 9", 9"') comprising fastening means (10, 10', 10", 10"') arranged to lock the support columns and a fastening member (11a to 11f, 11a', 11b', 11a", 11b", 11f", 11a"', 11b"', 11f"') at the bottom end of the support columns so that when the fastening member is in a locked position in relation to the fastening means, lifting of the support column from the locking recess is prevented, and the locking recesses being arranged to enable the fastening member of the support column to be released from the fastening means and the support column to be lifted from the locking recess, when the fastening member is in a released position in relation to the fastening means, the transport unit comprising tightening means for tightening the support column (8a to 8f, 8a', 8b', 8a", 8b", 8d", 8f", 8a"', 8b"', 8d"', 8f") against the load (6, 6', 6", 6"'), the tightening means comprising an elongated flexible member (16a to 16f, 16a', 16b', 16a", 16b"', 16d"', 16f"', 16a"', 16b"', 16d"', 16f"') and a tightening device (17a to 17f, 17a', 17b', 17a", 17b", 17d", 17f", 17a"', 17b"', 17d"', 17f") for tightening the elongated flexible member, a first fastening end of the tightening means being fastened to the transport unit and a second end of the tightening means, which is opposite to the first fatening end being fastened to a top end of the support column, **characterized in that** the fastening member of the support columns being locked to the fastening means of the locking recesses in the locked position so that the support column is able to tilt towards the load, and the tightening means being arranged to tilt the support column and change the angle (α) thereof in relation to the loading base (7, 7', 7", 7"') so that the top part of the support column presses against the load (6, 6', 6", 6"') when the elongated flexible member is tightened with the tightening device.

2. A transport unit as claimed in claim 1, **characterized in that** the elongated flexible member (16a to 16f, 16a', 16b', 16a", 16b") is fastened to a reinforcement (12 to 15, 12' to 15', 12"', 13"', 15"') of the transport unit at the first fastening end.

3. A transport unit as claimed in claim 2, **characterized in that** the transport unit is a container with a detachable roof (18, 18', 18"') and that the reinforcement is a stiffening profile (12 to 15, 12' to 15', 12"', 13"', 15"') at the top end of a wall structure of the container.

4. A transport unit as claimed in claim 1, **characterized in that** the shape of the locking recess (9, 9', 9", 9"') corresponds to the shape of the fastening member (11a to 11 f, 11 a', 11 b', 11 a", 11 b", 11f", 11a"', 11b"', 11f"') of the support column (8a to 8f, 8a', 8b', 8a"', 8b"', 8d"', 8f"') and that the fastening member is brought to a locked position by turning the fastening member in relation to the locking recess.

5. A transport unit as claimed in claim 4, **characterized in that** the shape of the locking recess (9, 9', 9", 9"') resembles a shape of a key hole comprising a centrally located circular opening (21) and two extensions (22, 23) of the opening, located diametrically opposite to one another in relation to the circular opening, the shape of the locking recess comprising two diametrically opposite circular rings (24, 25), each having a central angle θ of 40 to 150 degrees.

6. A transport unit as claimed in claim 5, **characterized in that** the fastening member (11a to 11f, 11a', 11b', 11a", 11b", 11f", 11a"', 11b"', 11f") is brought to a locked position by turning the fastening member 45 degrees in relation to the locking recess (9, 9', 9", 9"').

7. A transport unit as claimed in any one of preceding claims 1 to 6, **characterized in that** the locking recesses (9, 9', 9", 9"') in adjacent lines (L2, L2, L3) are arranged into a zigzag pattern and that the locking recesses of adjacent lines are turned 90 degrees in relation to one another.

8. A transport unit as claimed in any one of preceding claims 1 to 7, **characterized in that** the support column (8a to 8f, 8a', 8b', 8a", 8b", 8d", 8f", 8a"', 8b"', 8d"', 8f"') has a rectangular cross-section.

9. A transport unit as claimed in claim 8, **characterized in that** at least one corner of the bottom end of the support column is rounded or bevelled (29).

10. A transport unit as claimed in claim 1, **characterized in that** it comprises four support columns (8a to 8f, 8a", 8b", 8d", 8f", 8a"', 8b"', 8d"', 8f"') and four elongated flexible members (16a to 16f, 16a", 16b"', 16d"', 16f"', 16a"', 16b"', 16d"', 16f"') with tightening means (17a to 17f, 17a", 17b", 17d" 17f", 17a"', 17b"', 17d"', 17f"), the support members being locked into the locking recesses (9, 9', 9", 9"') in such a manner that a first fastening end of a first elongated flexible member (16b, 16b", 16b"') is attached to a first side (3, 3"', 3"') of the transport unit and a second fastening end of the first elongated flexible member (16b, 16b", 16b"') is fastened to a first support column (8b, 8b", 8b"'), that a first fastening end of a second elongated flexible member (16f, 16f", 16f"') is fastened to a side (2, 2", 2"') of the transport unit opposite to the first side (3, 3", 3"') and a second fastening end of the second elongated flexible member (16f, 16f", 16f"') is fastened to a second support column (8f, 8f", 8f"'), that a first fastening end of a third elongated flexible member (16a, 16a", 16a"') is fastened to a first end (5, 5", 5"') of the transport unit, which is at a right angle to the first and the second sides (3, 2, 3", 2", 3"', 2"') and a second fastening end of the third elongated flexible member is fastened to a third support column (8a, 8a", 8a"') and that a first fastening end of a fourth elongated flexible member (16d, 16d", 16d"') is fastened to a second end (4, 4", 4"') of the transport unit, which is opposite to the first end (5, 5", 5"'), and a second fastening end of the fourth elongated flexible member (16d, 16d", 16d"') is fastened to a fourth support column (8d, 8d", 8d"').

11. A transport unit as claimed in claim 1, **characterized in that** the tightening device (17a to 17f, 17a', 17b', 17a", 17b", 17d") is a ratchet-type device.

## Patentansprüche

1. Transporteinheit wie etwa ein Container, ein Eisenbahnwaggon, ein Lastwagen bzw. Anhänger einer Fahrzeugkombination und eine bewegliche Ladeplattform, wobei die Transporteinheit eine Ladebasis (7, 7', 7", 7"') zum Halten einer Last (6, 6', 6", 6"') von unten in einer vertikalen Richtung in der Transporteinheit und eine Halteanordnung zum Halten der Last in einer horizontalen Richtung in der Transporteinheit umfasst, wobei die Halteanordnung wenigstens eine Haltesäule (8a bis 8f, 8a', 8b', 8a", 8b", 8d", 8f", 8a"', 8b"', 8d"', 8f"') umfasst, deren unteres Ende angeordnet ist, um durch den Boden (1, 1', 1", 1"') der Transporteinheit gehalten zu werden und deren Seite gegen die zu haltende Last (6, 6', 6", 6"') zu setzen ist, wobei die Ladebasis (7, 7', 7", 7"') der Transporteinheit einen Satz von Sperrvertiefungen (9, 9', 9", 9"') zum Aufnehmen von unteren Enden von Haltesäulen (8a bis 8f, 8a', 8b', 8a", 8b", 8d", 8f", 8a"', 8b"', 8d"', 8f"') und zum lösbaren Befestigen der Haltesäulen an der Ladebasis umfasst, wobei die Sperrvertiefungen (9, 9', 9", 9"') in dem Boden (1, 1', 1 ", 1"') der Transporteinheit in wenigstens einer Linie (K1) parallel zu der Längsachse der Transporteinheit und außerdem in einer Vielzahl von parallelen Linien (L1, L2, M1, M2, M3, M4), die sich quer zu der Längsachse der Transporteinheit erstrecken, angeordnet sind, wobei die Sperrvertiefungen (9, 9', 9", 9"') Befestigungseinrichtungen (10, 10', 10", 10"'), die angeordnet sind, um die Haltesäulen zu sperren, und ein Befestigungsglied (11a bis 11f, 11a', 11b', 11a", 11b", 11f", 11a"', 11b"', 11f"') an dem unteren Ende der Haltesäulen umfassen, sodass, wenn sich das Befestigungsglied in einer gesperrten Position in Bezug auf die Befestigungseinrichtung befindet, ein Heben der Haltesäule aus der Sperrvertiefung verhindert wird, und wobei die Sperrvertiefungen angeordnet sind, um ein Lösen des Befestigungsglieds der Haltesäule von der Befestigungseinrichtung und ein Heben der Haltesäule aus der Sperrvertiefung zu gestatten, wenn sich das Befestigungsglied in einer gelösten Position in Bezug auf die Befestigungseinrichtung befindet, wobei die Transporteinheit Festzieheinrichtungen zum Festziehen der Haltesäule (8a bis 8f, 8a', 8b', 8a", 8b", 8d", 8f", 8a"', 8b"', 8d"', 8f"') gegen die Last (6, 6', 6", 6"') umfasst, wobei die Festzieheinrichtungen ein längliches, flexibles Glied (16a bis 16f, 16a', 16b', 16a", 16b", 16d", 16f", 16a"', 16b"', 16d"', 16f"') und eine Festziehvorrichtung (17a bis 17f, 17a', 17b', 17a", 17b", 17d", 17f", 17a"', 17b"', 17d"', 17f"') zum Festziehen des länglichen, flexiblen Glieds umfassen, wobei ein erstes Befestigungsende der Festzieheinrichtung an der Transporteinheit befestigt ist und ein zweites Ende der Festzieheinrichtung gegenüber dem ersten Befestigungsende an einem oberen Ende der Haltesäule befestigt ist, **dadurch gekennzeichnet, dass** das Befestigungsglied der Haltesäulen mit der Befestigungseinrichtung der Sperrvertiefungen in der gesperrten Position gesperrt ist, sodass die Haltesäule zu der Last hin gekippt werden kann, und die Festzieheinrichtung angeordnet ist, um die Haltesäule zu kippen und den Winkel (α) derselben in Bezug auf die Ladebasis (7, 7', 7", 7"') derart zu ändern, dass der obere Teil der Haltesäule gegen die Last (6, 6', 6", 6"') drückt, wenn das längliche, flexible Glied mit der Festziehvorrichtung festgezogen wird.

2. Transporteinheit nach Anspruch 1, **dadurch gekennzeichnet, dass** das längliche, flexible Glied (16a bis 16f, 16a', 16b', 16a", 16b") an einer Verstärkung (12 bis 15, 12' bis 15', 12"', 13"', 15"') der Transporteinheit an dem ersten Befestigungsende befestigt ist.

3. Transporteinheit nach Anspruch 2, **dadurch gekennzeichnet, dass** die Transporteinheit ein Container mit einem abnehmbaren Dach (18, 18', 18"') ist und dass die Verstärkung ein Versteifungsprofil (12 bis 15, 12' bis 15', 12"', 13"', 15"') an dem oberen Ende einer Wandstruktur des Containers ist.

4. Transporteinheit nach Anspruch 1, **dadurch gekennzeichnet, dass** die Form der Sperrvertiefung (9, 9', 9", 9"') der Form des Befestigungsglieds (11a bis 11f, 11a', 11b', 11a", 11b", 11f', 11a"', 11b"', 11f"') der Haltesäule (8a bis 8f, 8a', 8b', 8a"', 8b"', 8d"', 8f"") entspricht und dass das Befestigungsglied zu einer gesperrten Position gebracht wird, indem das Befestigungsglied in Bezug auf die Sperrvertiefung gedreht wird.

5. Transporteinheit nach Anspruch 4, **dadurch gekennzeichnet, dass** die Form der Sperrvertiefung (9, 9', 9", 9"') der Form eines Schlüssellochs mit einer mittig angeordneten, kreisförmigen Öffnung (21) und mit zwei Erweiterungen (22, 23) der Öffnung, die einander diametral gegenüberliegend in Bezug auf die kreisförmige Öffnung angeordnet sind, entspricht, wobei die Form der Sperrvertiefung zwei diametral gegenüberliegende Kreisringe (24, 25), die jeweils einen Mittenwinkel Θ von 40 bis 150 Grad aufweisen, umfasst.

6. Transporteinheit nach Anspruch 5, **dadurch gekennzeichnet, dass** das Befestigungsglied (11a bis 11f, 11a', 11b', 11a", 11b", 11f', 11a"', 11b"', 11f"') zu einer gesperrten Position gebracht wird, indem das Befestigungsglied 45 Grad in Bezug auf die Sperrvertiefung (9, 9', 9", 9"') gedreht wird.

7. Transporteinheit nach einem der Ansprüche 1 bis 6, **dadurch gekennzeichnet, dass** die Sperrvertiefungen (9, 9', 9", 9"') in benachbarten Linien (L2, L2, L3) in einem Zickzackmuster angeordnet sind und dass die Sperrvertiefungen von benachbarten Linien um 90 Grad in Bezug aufeinander gedreht sind.

8. Transporteinheit nach einem der Ansprüche 1 bis 7, **dadurch gekennzeichnet, dass** die Haltesäule (8a bis 8f, 8a', 8b', 8a", 8b", 8d", 8f", 8a"', 8b"', 8d"', 8f"') einen rechteckigen Querschnitt aufweist.

9. Transporteinheit nach Anspruch 8, **dadurch gekennzeichnet, dass** wenigstens eine Ecke des unteren Endes der Haltesäule gerundet oder abgeschrägt (29) ist.

10. Transporteinheit nach Anspruch 1, **dadurch gekennzeichnet, dass** diese vier Haltesäulen (8a bis 8f, 8a', 8b', 8a", 8b", 8d", 8f", 8a"', 8b"', 8d"', 8f"') und vier längliche, flexible Glieder (16a bis 16f, 16a', 16b', 16a", 16b", 16d", 16f", 16a"', 16b"', 16d"', 16f"') mit Festzieheinrichtungen (17a bis 17f, 17a', 17b', 17a", 17b", 17d", 17f", 17a"', 17b"', 17d"', 17f"') umfasst, wobei die Halteglieder in den Sperrvertiefungen (9, 9', 9", 9"') derart gesperrt sind, dass ein erstes Befestigungsende eines ersten länglichen, flexiblen Glieds (16b, 16b", 16b"') an einer ersten Seite (3, 3", 3"') der Transporteinheit angebracht ist und ein zweites Befestigungsende des ersten länglichen, flexiblen Glieds (16b, 16b", 16b"') an einer ersten Haltesäule (8b, 8b", 8b"') befestigt ist, dass ein erstes Befestigungsende eines zweiten länglichen, flexiblen Glieds (16f, 16f", 16f"') an einer Seite (2, 2", 2"') der Transporteinheit gegenüber der ersten Seite (3, 3", 3"') befestigt ist und ein zweites Befestigungsende des zweiten länglichen, flexiblen Glieds (16f, 16f", 16f"') an einer zweiten Haltesäule (8f, 8f", 8f"') befestigt ist, dass ein erstes Befestigungsende eines dritten länglichen, flexiblen Glieds (16a, 16a", 16a"') an einem ersten Ende (5, 5", 5"') der Transporteinheit, das mit einem rechten Winkel zu den ersten und zweiten Seiten (3, 2, 3", 2", 3"', 2"') angeordnet ist, befestigt ist und ein zweites Befestigungsende des dritten länglichen, flexiblen Glieds an einer dritten Haltesäule (8a, 8a", 8a"') befestigt ist, und dass ein erstes Befestigungsende eines vierten länglichen, flexiblen Glieds (16d, 16d", 16d"') an einem zweiten Ende (4, 4", 4"') der Transporteinheit gegenüber dem ersten Ende (5, 5", 5"') befestigt ist und ein zweites Befestigungsende des vierten länglichen, flexiblen Glieds (16d, 16d", 16d"') an einer vierten Haltesäule (8d, 8d", 8d"') befestigt ist.

11. Transporteinheit nach Anspruch 1, **dadurch gekennzeichnet, dass** die Festziehvorrichtung (17a bis 17f, 17a', 17b', 17a", 17b", 17d") eine Vorrichtung des Ratschentyps ist.

## Revendications

1. Unité de transport telle qu'un conteneur, à un wagon, un camion ou une remorque d'une combinaison de véhicule, et une plateforme de chargement mobile, l'unité de transport comprenant une base de chargement (7, 7', 7", 7"') pour le support d'une charge (6, 6', 6", 6"') du dessous dans une direction verticale dans l'unité de transport et un agencement de support pour le support de la charge dans une direction horizontale dans l'unité de transport, l'agencement de support comprenant au moins une colonne de support (8a à 8f, 8a', 8b', 8a", 8b", 8d", 8f", 8a"', 8b"', 8d"', 8f"'), dont l'extrémité inférieure est agencée pour être supportée par le fond (1, 1', 1", 1"') de l'unité de transport et dont le côté doit être placé contre la charge (6, 6', 6", 6"') à supporter, la base de chargement (7, 7', 7", 7"') de l'unité de transport comprenant un ensemble d'évidements de verrouillage (9, 9', 9", 9"') pour la réception d'extrémités inférieures des colonnes de support (8a à 8f, 8a', 8b', 8a", 8b", 8d", 8f", 8a"', 8b"', 8d"', 8f"') et pour la fixation des colonnes de support de manière détachable à la base de chargement, les évidements de verrouillage (9, 9', 9", 9"') étant agencés dans le fond (1, 1', 1", 1"') de l'unité de transport dans au moins une ligne (K1) parallèle à l'axe longitudinal de l'unité de transport et en outre dans une pluralité de lignes parallèles (L1, L2, M1, M2, M3, M4) qui sont transversales à l'axe longitudinal de l'unité de transport, les évidements de verrouillage (9, 9', 9", 9"') comprenant des moyens de fixation (10, 10', 10", 10"') agencés pour verrouiller les colonnes de support et un élément de fixation (11a à 11f, 11a', 11b', 11a", 11b", 11f', 11a"', 11b"', 11f"') sur l'extrémité inférieure des colonnes de support de sorte que lorsque l'élément de fixation est dans une position verrouillée par rapport aux moyens de fixation, le levage de la colonne de support de l'évidement de verrouillage soit évité, et les évidements de verrouillage étant agencés pour permettre à l'élément de fixation de la colonne de support d'être libéré des moyens de fixation et à la colonne de support d'être levée de l'évidement de verrouillage lorsque l'élément de fixation est dans une position libérée par rapport aux moyens de fixation, l'unité de transport comprenant des moyens de serrage pour serrer la colonne de support (8a à 8f, 8a', 8b', 8a", 8b", 8d", 8f", 8a"', 8b"', 8d"', 8f"') contre la charge (6, 6', 6", 6"'), les moyens de serrage comprenant un élément flexible allongé (16a à 16f, 16a', 16b', 16a", 16b"', 16d"', 16f"', 16a"', 16b"', 16d"', 16f"') et un dispositif de serrage (17a à 17f, 17a', 17b', 17a", 17b", 17d", 17f", 17a"', 17b"', 17d"', 17f"') pour le serrage de l'élément flexible allongé, une première extrémité de fixation des moyens de serrage étant fixée à l'unité de transport et une seconde extrémité des moyens de serrage, qui est en regard de la première extrémité de serrage, étant fixée à une extrémité supérieure de la colonne de support, **caractérisée en ce que** l'élément de fixation des colonnes de support est verrouillé aux moyens de fixation des évidements de verrouillage dans la position verrouillée de sorte que la colonne de support soit capable de s'incliner vers la charge, et les moyens de serrage sont agencés pour incliner la colonne de support et changer l'angle (α) de celle-ci par rapport à la base de chargement (7, 7', 7", 7"') de sorte que la partie supérieure de la colonne de support presse contre la charge (6, 6', 6", 6"') lorsque l'élément flexible allongé est serré avec le dispositif de serrage.

2. Unité de transport selon la revendication 1, **caractérisée en ce que** l'élément flexible allongé (16a à 16f, 16a', 16b', 16a" , 16b") est fixé à un renforcement (12 à 15, 12' à 15', 12"', 13"', 15"') de l'unité de transport sur la première extrémité de fixation.

3. Unité de transport selon la revendication 2, **caractérisée en ce que** l'unité de transport est un conteneur avec un toit détachable (18, 18', 18"') et **en ce que** le renforcement est un profilé de raidissement (12 à 15, 12' à 15', 12"', 13"', 15"') sur l'extrémité supérieure d'une structure de paroi du conteneur.

4. Unité de transport selon la revendication 1, **caractérisée en ce que** la forme de l'évidement de verrouillage (9, 9', 9", 9"') correspond à la forme de l'élément de fixation (11a à 11f, 11a', 11b', 11a", 11b", 11f", 11a"', 11b"', 11f"') de la colonne de support (8a à 8f, 8a', 8b', 8a"', 8b"', 8d"', 8f"') et **en ce que** l'élément de fixation est amené dans une position verrouillée par rotation de l'élément de fixation par rapport à l'évidement de verrouillage.

5. Unité de transport selon la revendication 4, **caractérisée en ce que** la forme de l'évidement de verrouillage (9, 9', 9", 9"') ressemble à une forme d'un trou de serrure comprenant une ouverture circulaire (21) située centralement et deux extensions (22, 23) de l'ouverture, situées de manière diamétralement opposée l'une à l'autre par rapport à l'ouverture circulaire, la forme de l'évidement de verrouillage comprenant deux anneaux circulaires (24, 25) diamétralement opposés, chacun présentant un angle central θ de 40 à 150 degrés.

6. Unité de transport selon la revendication 5, **caractérisée en ce que** l'élément de fixation (11a à 11f, 11a', 11b', 11a", 11b", 11f", 11a"', 11b"', 11f"') est amené dans une position verrouillée par rotation de l'élément de fixation de 45 degrés par rapport à l'évidement de verrouillage (9, 9', 9", 9"').

7. Unité de transport selon l'une quelconque des revendications précédentes 1 à 6, **caractérisée en ce que** les évidements de verrouillage (9, 9', 9", 9"') dans des lignes (L2, L2, L3) adjacentes sont agencés dans un modèle en zigzag et **en ce que** les évidements de verrouillage de lignes adjacentes sont tournés de 90 degrés les uns par rapport aux autres.

8. Unité de transport selon l'une quelconque des revendications précédentes 1 à 7, **caractérisée en ce que** la colonne de support (8a à 8f, 8a', 8b', 8a", 8b", 8d", 8f", 8a"', 8b"', 8d"', 8f"') présente une section transversale rectangulaire.

9. Unité de transport selon la revendication 8, **caractérisée en ce qu'**au moins un coin de l'extrémité inférieure de la colonne de support est arrondi ou biseauté (29).

10. Unité de transport selon la revendication 1, **caractérisée en ce qu'**elle comprend quatre colonnes de support (8a à 8f, 8a", 8b", 8d", 8f", 8a"', 8b"', 8d"', 8f"') et quatre éléments flexibles allongés (16a à 16f, 16a", 16b"', 16d"', 16f"', 16a"', 16b"', 16d"', 16f"') avec des moyens de serrage (17a à 17f, 17a", 17b", 17d", 17f", 17a"', 17b"', 17d"', 17f"'), les éléments de support étant verrouillés dans les évidements de verrouillage (9, 9', 9", 9"') de telle manière qu'une première extrémité de fixation d'un premier élément flexible allongé (16b, 16b", 16b"') soit attachée à un premier côté (3, 3"', 3"') de l'unité de transport et une seconde extrémité de fixation du premier élément flexible allongé (16b, 16b", 16"') soit fixée à une première colonne de support (8b, 8b", 8b"'), qu'une première extrémité de fixation d'un second élément flexible allongé (16f, 16f", 16f"') soit fixée à un côté (2, 2", 2"') de l'unité de transport en regard du premier côté (3, 3", 3"') et une seconde extrémité de fixation du second élément flexible allongé (16f, 16f", 16f"') soit fixée à une seconde colonne de support (8f, 8f", 8f"'), qu'une première extrémité de fixation d'un troisième élément flexible allongé (16a, 16a", 16a"') soit fixée à une première extrémité (5, 5", 5"') de l'unité de transport, qui est à angle droit par rapport aux premier et second côtés (3, 2, 3", 2", 3"', 2"'), et une seconde extrémité de fixation du troisième élément flexible allongé soit fixée à une troisième colonne de support (8a, 8a", 8a"') et qu'une première extrémité de fixation d'un quatrième élément flexible allongé (16d, 16d", 16d"') soit fixée à une seconde extrémité (4, 4", 4"') de l'unité de transport, qui est en regard de la première extrémité (5, 5", 5"'), et une seconde extrémité de fixation du quatrième élément flexible allongé (16d, 16d", 16d"') soit fixée à une quatrième colonne de support (8d, 8d", 8d"').

11. Unité de transport selon la revendication 1, **caractérisée en ce que** le dispositif de serrage (17a à 17f, 17a', 17b', 17a", 17b", 17d") est un dispositif de type à cliquet.
